# EUROPÄISCHE PATENTSCHRIFT

(11) **EP 3 253 530 B1**
(45) Veröffentlichungstag und Bekanntmachung des Hinweises auf die Patenterteilung: **10.04.2024**
(21) Anmeldenummer: 16702439.7
(22) Anmeldetag: 02.02.2016
(51) Int. Cl.: B23Q 5/04, B23Q 17/12, G01N 29/14

(54) **SPINDELVORRICHTUNG FÜR EINE PROGRAMMGESTEUERTE WERKZEUGMASCHINE**
SPINDLE DEVICE FOR A PROGRAM-CONTROLLED MACHINE TOOL
ENSEMBLE BROCHE POUR MACHINE-OUTIL À COMMANDE NUMÉRIQUE

(30) Priorität: 02.02.2015 DE 202015001082 U
(43) Veröffentlichungstag der Anmeldung: 13.12.2017
(73) Patentinhaber: DECKEL MAHO Pfronten GmbH, 87459 Pfronten (DE)
(72) Erfinder: VEITTINGER, Hans, 87439 Kempten (DE)
(74) Vertreter: MERH-IP Matias Erny Reichl Hoffmann Patentanwälte PartG mbB
(86) Internationale Anmeldenummer: PCT/EP2016/052203
(87) Internationale Veröffentlichungsnummer: WO 2016/124609

(56) Entgegenhaltungen:
- EP-A1- 1 927 855
- CN-A- 103 967 942
- DE-A1- 19 626 879
- DE-C1- 3 627 796
- JP-A- S62 242 853
- US-A- 5 618 993
- Dittel Marposs GmbH: "Balancing heads / AE-Sensors Electronics / Condition Monitoring", , 28 February 2014 (2014-02-28), pages 1-28, XP55890322, Retrieved from the Internet: URL:https://www.marposs.com/media/7699/d-1 /t-file/Dittel_WB-AE_Overview_EN.pdf [retrieved on 2022-02-09]

## Beschreibung

Die vorliegende Erfindung betrifft eine Bearbeitungseinheit, insbesondere mit Arbeitsspindel, für eine programmgesteuerte Werkzeugmaschine bzw. eine Spindelvorrichtung für eine programmgesteuerte Werkzeugmaschine, insbesondere für eine Fräsmaschine, Fräs-/Drehmaschine, Universalfräsmaschine, Universalwerkzeugmaschine bzw. ein CNC-Bearbeitungszentrum.

### Hintergrund

Zur Bearbeitung bzw. Fertigung von Werkstücken sind im Stand der Technik universell einsetzbare Werkzeugmaschinen, insbesondere programmgesteuerte bzw. numerisch steuerbare Werkzeugmaschinen bekannt, wie z.B. Fräsmaschinen, Fräs-/Drehmaschinen, Universalfräsmaschinen, Universalwerkzeugmaschinen bzw. CNC-Bearbeitungszentren, die meist eine oder mehrere werkzeugtragende Arbeitsspindeln aufweisen, zur Aufnahme z.B. von Bohr- bzw. Fräswerkzeugen.

An derartigen werkzeugtragenden Arbeitsspindeln können Werkzeuge mit Werkzeugschnittstellen, wie z.B. Werkzeugkegel, insbesondere Morsekegel, Steilkegel bzw. Hohlschaftkegel, an Aufnahmevorrichtungen bzw. Werkzeugaufnahmen der Arbeitsspindeln aufgenommen werden, um dann an der Arbeitsspindel angetrieben zu werden. Dies können unterschiedlichste Bohr- bzw. Fräswerkzeuge oder andere Werkzeuge sein, die jeweils an dem typischerweise standardisierten Werkzeugschnittstellen eingespannt bzw. fixiert werden.

Jedoch kann es gemäß den heutigen vielschichtigen Anforderungen in der Werkstückfertigung zweckmäßig sein, statt bzw. zusätzlich zu den üblichen Fräs- bzw. Bohrwerkzeugen für Fräs- bzw. Bohrbearbeitungen eines Werkstücks an der universell einsetzbaren Werkzeugmaschine weiterhin auch zusätzliche oder alternative Schleifbearbeitungen des Werkstücks an der universell einsetzbaren Werkzeugmaschine durchzuführen, für die üblicherweise spezielle programmgesteuerte Schleifmaschinen vorgesehen sind, so dass das Werkstück für eine Schleifbearbeitung nach Fräs- bzw. Bohrbearbeitungen an der universell einsetzbaren Werkzeugmaschine üblicherweise an der speziellen programmgesteuerten Schleifmaschine eingespannt werden muss, oder das Werkstück für eine Fräs- bzw. Bohrbearbeitung nach der Schleifbearbeitung an der speziellen programmgesteuerten Schleifmaschine üblicherweise an einer Fräsmaschine bzw. einer universell einsetzbaren programmgesteuerten Werkzeugmaschine eingespannt werden muss.

Eine Aufgabe der Erfindung ist es im Hinblick auf die vorstehenden Überlegungen bzw. Problemstellungen, eine universell einsetzbare programmgesteuerte Werkzeugmaschine derart weiterzubilden bzw. bereitzustellen, dass diese neben den üblichen Fräs- und Bohrbearbeitungen eines Werkstücks zudem auch eine effiziente, genaue und zuverlässige Schleifbearbeitung ermöglichen kann, insbesondere z.B. bei Verwendung eines Schleifwerkzeugs an der universell einsetzbaren programmgesteuerten Werkzeugmaschine, die üblicherweise für Fräs- und Bohrbearbeitungen eingerichtet ist; einerseits bevorzugt ohne die universellen Bearbeitungsmöglichkeiten der Fräs- und Bohrbearbeitung einzuschränken, dabei aber bevorzugt dennoch die heutigen Anforderungen an Genauigkeit, Effizienz und Zuverlässigkeit der Schleifbearbeitungen zu gewährleisten, z.B. ähnlich oder gar besser im Vergleich zu der Effizienz, Genauigkeit und Zuverlässigkeit, die an den vorbekannten speziellen programmgesteuerten Schleifmaschinen erreichbar ist.

Eine gattungsgemäße Bearbeitungseinheit ist z.B. aus der DE 10 2013 201328 A1 bekannt, wobei Sensorik zur Verwendung bei Fräs- und Bohrbearbeitungen an einer Stirnseite einer Arbeitsspindel einer Werkzeugmaschine untergebracht sein kann.

Weiterhin ist aus der JPS 62 242 853 A eine Bearbeitungseinheit mit einer Spindelvorrichtung bekannt, bei der innerhalb von Bohrungen einer rotierenden Arbeitsspindelwelle Sensoren angeordnet sind, die zur Erfassung von durch die Bearbeitung bedingten Körperschwingungen eingerichtet sind.

Weiterhin sind auch aus dem Produktkatalog "Balancing heads / AE-Sensor Electronics / Condition Monitoring" der Dittel Marposs GmbH (Edition 03/14 vom 28. Februar 2014, Seiten 1 bis 28, XP55890322) mehrere Sensoren zum Einsatz an unterschiedlichsten Arbeitsspindeln bekannt, die jeweils eingerichtet sind, durch die Bearbeitung bedingte Körperschwingungen zu erfassen.

### Zusammenfassung

Im Hinblick auf die vorstehend genannte Aufgabe der Erfindung wird erfindungsgemäß eine Spindelvorrichtung zum Einsatz an einer programmgesteuerten Werkzeugmaschine gemäß Anspruch 1 vorgeschlagen, bzw. eine entsprechende Bearbeitungseinheit mit Arbeitsspindel für eine programmgesteuerten Werkzeugmaschine, und nebengeordnet wird zudem eine programmgesteuerte Werkzeugmaschine vorgeschlagen, die eine oder mehrere derartige erfindungsgemäße Spindelvorrichtungen zum Einsatz an der programmgesteuerten Werkzeugmaschine bzw. eine oder mehrere derartige entsprechende Bearbeitungseinheiten mit Arbeitsspindel für die programmgesteuerten Werkzeugmaschine umfasst. Abhängige Ansprüche betreffen bevorzugte Ausführungsbeispiele der Erfindung.

Erfindungsgemäß wird eine Spindelvorrichtung mit den Merkmalen nach Anspruch 1 vorgeschlagen.

Bevorzugt steht der innere Abschnitt des zweiten Ringelements mit zumindest einem Abschnitt der Werkzeugschnittstelle in Kontakt, wenn die Werkzeugschnittstelle in dem Werkzeugaufnahmeabschnitt der Spindelvorrichtung eingesetzt und mittels der Spannvorrichtung gespannt ist. Dies hat den Vorteil, dass der Körperschall von der Werkzeugschnittstelle besonders störungsfrei zu dem Ringelement geführt werden kann, an dem oder in dem Körperschallsensor angeordnet sein kann.

Bevorzugt umfasst der ringförmige Körperschallsensor einen ringförmigen (oder zumindest teilringförmigen) Rotor-Sensorabschnitt und/oder einen ringförmigen (oder zumindest teilringförmigen) Stator-Sensorabschnitt.

Bevorzugt ist der ringförmige Rotor-Sensorabschnitt in oder an dem zweiten Ringelement angeordnet oder gehalten, und/oder bevorzugt ist der ringförmige Stator-Sensorabschnitt in oder an dem ersten Ringelement angeordnet oder gehalten.

Bevorzugt ist das zweite Ringelement bevorzugt drehfest mit einer im Spindelgehäuse bevorzugt drehbar gelagerten Spindelkopfwelle der Spindelvorrichtung verbunden oder an dieser befestigt, insbesondere vorzugsweise lösbar befestigt.

Bevorzugt ist das erste Ringelement drehfest an dem Spindelgehäuse befestigt, insbesondere vorzugsweise lösbar befestigt.

In besonders bevorzugten und zweckmäßigen Ausführungsbeispielen umfasst die Spindelvorrichtung eine Mehrzahl von Spindellagern.

Der Körperschallsensor ist bevorzugt auf einer der Außenseite der Spindelvorrichtung zugewandten Seite des äußersten Spindellagers der Mehrzahl von Spindellagern angeordnet. Besonders bevorzugt wird der Körperschallsensor derart positioniert angeordnet, dass in einer direkten Körperschallwellenausbreitungsrichtung in der Spindelvorrichtung von dem Werkzeugaufnahmeabschnitt hin zu dem Körperschallsensor keines der Spindellager ist.

In weiteren beispielhaften Aspekten kann die Spindelvorrichtung bzw. dessen Körperschallsensor mittels eines zusätzlichen (z.B. konventionellen) Körperschallsensors kalibriert werden, z.B. indem ein zweiter Körperschallsensor das Antasten des Schleifwerkzeugs zusätzlich zu dem Körperschallsensor der Spindelvorrichtung detektiert und die Signale der Sensoren verglichen werden, zur Kalibration des Körperschallsensors der Spindelvorrichtung. In weiteren beispielhaften Aspekten kann die Spindelvorrichtung bzw. dessen Körperschallsensor mittels eines zusätzlichen (z.B. konventionellen) Körperschallsensors kalibriert werden, z.B. indem ein zweiter Körperschallsensor an einem zu bearbeitenden Werkstück oder an Werkstückeinspannmitteln der Werkzeugmaschine befestigt wird, und die Signale der Sensoren z.B. während der Bearbeitung oder einer Testbearbeitung eines Testwerkstücks verglichen werden, zur Kalibration des Körperschallsensors der Spindelvorrichtung.

In weiteren beispielhaften Aspekten kann bevorzugt ein Verfahren zur schleifenden Bearbeitung eines Werkstücks an einer universell einsetzbaren Werkzeugmaschine mit einer vorstehend beschriebenen Spindelvorrichtung bereitgestellt werden, umfassend: Schleifbearbeiten eines an einem Werkstückspannmittel der Werkzeugmaschine eingespannten Werkstücks mit einem Schleifwerkzeug, das gehalten ist an einer an der Spannvorrichtung der Arbeitsspindel der Spindelvorrichtung eingespannten und in dem Werkzeugaufnahmeabschnitt der Spindelvorrichtung eingesetzten Werkzeugschnittstelle, und Erfassen der bei der Schleifbearbeitungen auftretenden Körperschallwellen bzw. -schwingungen mittels des Körperschallsensors der Sensorikeinrichtung der Spindelvorrichtung.

In weiteren beispielhaften Aspekten kann bevorzugt ein Verfahren zum Abrichten eines Schleifwerkzeugs an einer universell einsetzbaren Werkzeugmaschine mit einer vorstehend beschriebenen Spindelvorrichtung bereitgestellt werden, umfassend: Durchführen eines Abziehvorgangs für ein Schleifwerkzeug, das gehalten ist an einer an der Spannvorrichtung der Arbeitsspindel der Spindelvorrichtung eingespannten und in dem Werkzeugaufnahmeabschnitt der Spindelvorrichtung eingesetzten Werkzeugschnittstelle, an einem Abziehstück unter Überwachung des Abziehvorgangs auf Basis eines Körperschallsignals des Körperschallsensors der Sensorikeinrichtung der Spindelvorrichtung.

### Kurzbeschreibung der Figuren

**Fig. 1** zeigt eine beispielhafte schematische perspektivische Explosionsdarstellung einer Bearbeitungseinheit für eine programmgesteuerte Werkzeugmaschine gemäß einem Ausführungsbeispiel der vorliegenden Erfindung;
**Figs. 2A****,** **2B****,** **2C** und **2D** zeigen beispielhafte schematische Schnittdarstellungen bzw. Teilschnittdarstellungen einer Bearbeitungseinheit für eine programmgesteuerte Werkzeugmaschine gemäß einem weiteren Ausführungsbeispiel der vorliegenden Erfindung; und
**Fig. 3** zeigt eine beispielhafte schematische Schnittdarstellung bzw. Teilschnittdarstellung einer weiteren Bearbeitungseinheit für eine programmgesteuerte Werkzeugmaschine gemäß einem weiteren Ausführungsbeispiel der vorliegenden Erfindung.

### Detaillierte Beschreibung der Figuren und bevorzugter Ausführungsbeispiele

im Folgenden werden Beispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindungjedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

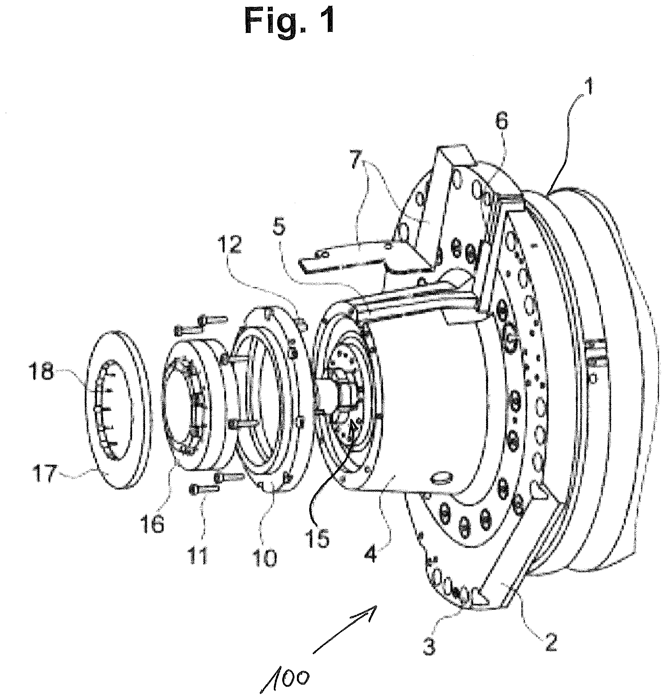

**Fig. 1** zeigt eine beispielhafte schematische perspektivische Explosionsdarstellung einer Bearbeitungseinheit für eine programmgesteuerte Werkzeugmaschine gemäß einem Ausführungsbeispiel der vorliegenden Erfindung.

Insbesondere zeigt Fig. 1 eine beispielhafte schematische perspektivische Explosionsdarstellung von Teilen einer Spindelvorrichtung 100 einer Arbeitsspindel, insbesondere einer werkzeugtragenden Arbeitsspindel, für eine programmgesteuerte Werkzeugmaschine (nicht dargestellt) gemäß einem Ausführungsbeispiel der vorliegenden Erfindung.

Die beispielhafte, dargestellte Bearbeitungseinheit mit einer Arbeitsspindel bzw. Spindelvorrichtung 100 ist zum Beispiel zur Durchführung von Fräs- und/oder Bohrarbeiten an Werkstücken eingerichtet, die an Werkstückeinspannmitteln der Werkzeugmaschine eingespannt sind, z.B. unter Verwendung von - in Fig. 1 nicht dargestellten - Werkzeugen, insbesondere Fräs- und Bohrwerkzeugen, die üblicherweise unter Verwendung von an der Arbeitsspindel einwechselbaren Werkzeugschnittstellen an der Arbeitsspindel bzw. Spindelvorrichtung eingespannt werden können und dann durch die Arbeitsspindel bzw. Spindelvorrichtung zur Erzeugung bzw. zum Antrieb der Zerspanbewegung bei hohen Drehzahlen rotatorisch angetrieben werden.

Eine oder mehrere der Bearbeitungseinheiten mit einer Arbeitsspindel bzw. Spindelvorrichtungen 100 einer Arbeitsspindel können z.B. zur Bearbeitung bzw. Fertigung von Werkstücken für bzw. an Werkzeugmaschinen vorgesehen sein, insbesondere z.B. an programmgesteuerten bzw. numerisch steuerbaren Werkzeugmaschinen, wie z.B. Fräsmaschinen, Fräs-/Drehmaschinen, Universalfräsmaschinen, Universalwerkzeugmaschinen bzw. CNC-Bearbeitungszentren, die eine oder mehrere werkzeugtragende Arbeitsspindeln aufweisen.

An derartigen Arbeitsspindeln können typischerweise Werkzeuge mit Werkzeugschnittstellen, wie z.B. Werkzeugkegel, insbesondere Morsekegel, Steilkegel bzw. Hohlschaftkegel, an Aufnahmevorrichtungen bzw. Werkzeugaufnahmen der Arbeitsspindeln aufgenommen werden, um dann an der Arbeitsspindel angetrieben zu werden. Dies können unterschiedlichste Bohr- bzw. Fräswerkzeuge oder andere Werkzeuge sein, die jeweils an dem typischerweise standardisierten Werkzeugschnittstellen bzw. Werkzeugkegel eingespannt bzw. fixiert werden.

Die Bearbeitungseinheit/Spindelvorrichtung 100 gemäß Fig. 1 umfasst ein Spindelgehäuse 1, das an einem weiteren Bauteil der Werkzeugmaschine befestigt bzw. mit diesem zusammengebaut werden kann, insbesondere mit einem Spindelkopfträger bzw. einem Schwenkkopf der Werkzeugmaschine und zwar ggf. mit Hilfe eines Ringflansches 2, der für die Befestigung an bzw. den Zusammenbau mit weiteren Bauteilen der Werkzeugmaschine beispielhaft eine Vielzahl von axialen Bohrungen 3 aufweist. Die Arbeitsspindel 15 ist im inneren der Gehäuses 1 drehbar gelagert.

An der Vorderseite des Ringflansches 2 ist beispielhaft ein kegelstumpfförmiges Gehäuseteil 4 der Bearbeitungseinheit/Spindelvorrichtung 100 befestigt, in dessen Umfangswand beispielhaft eine (oder mehrere) nach außen offene Längsnut 5 eingearbeitet ist. Die Längsnut 5 findet ihre Fortsetzung beispielhaft in einer Aufnahmenut 6, die im Ringflansch 2 beispielhaft ausgebildet ist. Die Längsnut 5 und deren Fortsetzung, d.h. z.B. die Aufnahmenut 6, bilden beispielhaft einen Aufnahmekanal für ein (in Fig. 1 nicht dargestelltes) Energie- und/oder Messdatenkabel, das in diesem Aufnahmekanal 5, 6 verlegt und danach durch ein am Gehäuseteil 4 lösbar befestigtes Formblech 7 abgedeckt werden kann.

In Fig. 1 ist vor dem Stirnende des Gehäuseteils 4 ein erstes Ringelement 10 dargestellt, das mit der Stirnseite des Gehäuseteils 4 beispielhaft durch eine Mehrzahl von Befestigungselementen 11 (z.B. Schraubbolzen) lösbar befestigt werden kann. Das erste Ringelement 10 hat beispielhaft einen profilierten Querschnitt und stützt sich beispielhaft mit seiner in Fig. 1 rechten Stirnfläche (d.h. insbesondere mit der der Spindel zugewandten Seite) an der linken ringförmigen Stirnfläche des Gehäuseteils 4 ab bzw. ist an dieser angebracht bzw. lösbar befestigt.

An dem Stirnende der Arbeitsspindel ist ein zweites Ringelement 16 durch eine Mehrzahl von Befestigungsmitteln (z.B. Stiftschrauben) an dem ersten Ringelement 10 lösbar befestigt, wobei das zweite Ringelement 16 zusammen mit der Arbeitsspindel dreht und folglich einen Rotor darstellen kann.

Das zweite Ringelement 16 hat beispielhaft eine zylindrische innere Umfangsfläche und beispielhaft einen abgestuften Querschnitt. Abgedeckt wird das zweite Ringelement 16 beispielhaft durch ein ringförmiges Abdeckelement 17, das in Plananlage mit Hilfe von Befestigungsmitteln (z.B. Stiftschrauben 18) lösbar an der beispielhaft planen Endfläche der Spindel befestigt ist und die Arbeitsspindel unter Freilassung der Werkzeugaufnahme zum Einspannen eines Werkzeugschaftes stirnseitig abschließt.

In dem ersten Ringelement 10 können beispielhaft Empfänger- und/oder Übertragungsmittel untergebracht sein, die der berührungslosen Übertragung von Messdaten, Sensorsignalen und/oder Energiesignalen dienen können. Weiterhin ist an dem ersten Ringelement 10 beispielhaft ein Kabelgangabschnitt 12 für den elektrischen Anschluss an die Sensorik vorgesehen (z.B. Anschluss des/der Energie- und/oder Messkabel an das/die Empfänger- bzw. Übertragungsmittel), welcher dem Kabelkanal der Längsnut 5 gegenüberliegt und in montiertem Zustand in diesen Kabelkanal hineinragen kann.

In dem zweiten Ringelement 16 können ein oder mehrere Sensoren untergebracht sein. Dies kann z.B. Sensoren, z.B. Vibrationssensoren, umfassen, mit denen betriebsbedingte Verformungen der Spindel bzw. des Spindelkopfes in axialer und auch in Umfangsrichtung erfasst werden können. Verschiedene Sensortypen, beispielsweise druck-, spannungs- oder kraftsensible Sensoren, sind als Messfühler geeignet, um beispielsweise Ausrichtfehler der Spindel und/oder Formänderungen zu erfassen.

Die Sensorik umfasst gegebenenfalls eine mit den verschiedenen Sensoren elektronisch gekoppelte Auswerteeinrichtung, die eine Auswertung und auch eine Speicherung der erfassten Daten vornimmt und mikroprozessorgesteuert sein kann. Auch die Verschleißwerte der Spanwerkzeuge und eventuelle Beschädigungen von Maschinenbauteilen durch Stoßkollisionen können mit Hilfe dieser Sensorik erfasst, gespeichert und in der Maschinensteuerung entsprechend berücksichtigt werden. Des Weiteren ist es mit Vibrationssensoren möglich, Unwuchtsmessungen durchzuführen bzw. Lagerschäden von Lagern der Arbeitsspindel auf Basis einer Auswertung der Messsignale zu detektieren.

Im Kabelkanal 5 des Gehäuseteils 4 verlegtes Kabel (Mess- und/oder Energiekabel) bis in den stationären Außenring (erstes Ringelement 10), der mit dem Spindelgehäuseteil 4 fest verbunden ist. In diesem Außenring (erstes Ringelement 10) befinden sich ggf. Anschlüsse für das Energie- und Messdatenkabel, wobei dieses Energie -bzw. Messkabel auch mit einem in dem stationären Außenring (erstes Ringelement 10) angeordneten Übertragungselement verbunden sein, dessen Gegenelement (Empfängerelement) sich in dem mit der Spindel drehenden Rotorring (zweites Ringelement 16) befinden kann.

Gemäß dem Ausführungsbeispiel der Erfindung ist die Spindelvorrichtung 100 dazu ausgebildet, Schleifbearbeitungen zu ermöglichen, indem mittels der koppelbaren Werkzeugschnittstelle statt einem Fräs- oder Bohrwerkzeug ein an der Werkzeugschnittstelle befestigtes bzw. eingespanntes Schleifwerkzeug eingesetzt wird, so z.B. eine an der Werkzeugschnittstelle befestigte bzw. eingespannte Schleifscheibe zum Plan- und/oder Längsschleifen eines Werkzeugs.

Für die Bearbeitung eines Werkstücks mit einem an der Spindelvorrichtung 100 eingesetzten bzw. eingewechselten Schleifwerkzeug wird die Sensorik der Spindelvorrichtung derart ausgebildet, dass die Sensoren bzw. die Sensorik der Spindelvorrichtung 100 zumindest einen Körperschallsensor umfasst, der dazu eingerichtet ist, Schall- bzw. Körperschall zu erfassen, der bei der Schleifbearbeitung des Werkstücks entsteht bzw. verursacht wird, und über das Schleifwerkzeug und die Werkzeugschnittstelle auf die Elemente bzw. Bauteile der Spindelvorrichtung 100 übertragen werden.

Zum Hintergrund sei darauf hingewiesen, dass der Begriff "Körperschall" (engl. "acoustic emmision" bzw. "AE") eine Ausbreitung von im Festkörper verlaufenden Körperschallwellen bzw. Körperschallschwingungen beschreibt, wobei hierbei eine Ausbreitung von Longitudinalwellen bzw. -schwingungen (insbesondere Wellen bzw. Schwingungen in der inneren Struktur des Festkörpers) und/oder eine Ausbreitung von Transversalwellen bzw. -schwingungen (insbesondere Wellen bzw. Schwingungen auf der Oberfläche des Festkörpers) im Festkörper auftreten kann, meist bei unterschiedlichen Ausbreitungsgeschwindigkeiten (Körperschallgeschwindigkeit).

Körperschallschwingungen treten z.B. typischerweise bei Frequenzen im Ultraschallbereich und insbesondere bei etwa 20 kHz bis 2 MHz auf, und somit typischerweise außerhalb des menschlichen Frequenz-Hörbereichs. In Stahl z.B. beträgt die Ausbreitungsgeschwindigkeit bei Longitudinalwellen bzw. -schwingungen etwa 5000 m/s und bei Transversalwellen bzw. -schwingungen etwa 3100 m/s.

Typische Messbereiche von Körperschallsensoren sind z.B. im Bereich 50 - 900 kHz bzw. bevorzugt im Bereich 100 - 400 kHZ, insbesondere um Resonanzeffekte zu reduzieren.

Insbesondere bei Schleifbearbeitungen (d.h. Zerspanvorgang mit geometrisch unbestimmter Schneide, im Gegensatz zum Zerspanvorgang mit geometrisch bestimmter Schneide, d.h. z.B. Fräsen oder Bohren) tritt typischerweise Körperschall auf, der beim Zerspanprozess am Werkstück in Kontakt mit dem Schleifwerkzeug entsteht und sich dann im Werkstück und im Schleifwerkzeug ausbreitet und auf weitere verbundene Elemente überträgt.

Derartige Schwingungen können sensorisch mittels Körperschallsensoren erfasst werden, und können somit noch während des Bearbeitungsprozesses Aussagen über den Zerspanprozess mit geometrisch unbestimmter Schneide ermöglichen, so dass die Körperschallmessung mittels Diagnose- und Datenbeobachtungseinheiten der Auswerteeinheiten bzw. der Maschinensteuerung eine Momentanüberwachung bzw. Prozessüberwachung der Bearbeitung und der Prozessparameter während der Schleifbearbeitung ermöglicht.

Für Schleifbearbeitungen ist es z.B. möglich, auf Basis der Überwachung des Körperschallsignals währen der Bearbeitung bzw. beim Abrichtvorgang zu detektieren bzw. erfassen, wenn/sobald bei dem Verfahren des Schleifwerkzeugs (mit geometrisch unbestimmter Schneide) hin zu dem zu bearbeitenden Werkstück und/oder bei dem Verfahren des Werkstücks hin zu dem Schleifwerkzeug ein erster Kontakt zwischen dem Schleifwerkzeug bzw. den ersten Schleifkörnern der Schleifwerkzeugoberfläche mit der Werkstückoberfläche entsteht (sog. Anschnitterkennung).

Dies ist ebenfalls bei einem Abziehvorgang des Schleifwerkzeugs (welcher üblicherweise an speziellen Abziehvorrichtungen durchgeführt werden muss) von Vorteil, insbesondere indem es auf Basis der Überwachung des Körperschallsignals währen des Abziehvorgangs möglich ist, zu detektieren bzw. erfassen, wenn/sobald bei dem Verfahren des Schleifwerkzeugs (mit geometrisch unbestimmter Schneide) hin zu dem Abziehstücks (z.B. Abziehdiamant) und/oder bei dem Verfahren des Abziehstücks hin zu dem Schleifwerkzeug ein erster Kontakt zwischen dem Schleifwerkzeug bzw. den ersten Schleifkörnern der Schleifwerkzeugoberfläche mit der Oberfläche des Abziehstücks entsteht.

Hierbei ergibt sich z.B. bei dem Abziehvorgang neben der Detektierung eines ersten Kontakts auf Basis des Körperschallsignals zudem die weitere vorteilhafte Möglichkeit, auf Basis des Körperschallsignals zu erfassen, wenn der Abziehvorgang beendet werden kann, d.h. z.B. wenn eine Schleifoberfläche des Schleifwerkzeugs vollständig abgezogen ist, da dies durch ein durchgehendes Körperschallsignal detektiert bzw. erfasst werden kann.

Hierbei kann die Maschinensteuerung der Werkzeugmaschine ggf. einen automatischen Programmzyklus aufweisen, den der Bediener leicht starten kann, indem z.B. im Abziehvorgang in einem ersten automatischen Zyklusschritt eine automatische Annäherung mit größeren Abstandsschritten durchfahren werden kann, bis der erste Kontakt auf Basis des Körperschallsignals an der Maschinensteuerung detektiert wird, um dann in einem zweiten automatischen Zyklusschritt den eigentlichen Abziehvorgang automatisch in kleineren Abstandsschritten automatisch zu durchfahren, bis auf Basis eines erfassten durchgehenden Körperschallsignals an der Maschinensteuerung erkannt wird, dass der Abziehvorgang beendet werden kann, woraufhin die Maschinensteuerung den automatischen Zyklus beendet, und der Bediener über die Benutzeroberfläche informiert wird, dass der automatische Abziehvorgang beendet ist.

Bei dem eigentlichen Zustellen des Schleifwerkzeugs zu dem zu bearbeitenden Werkstück im Bearbeitungsvorgang ist ebenfalls denkbar, dass ein automatischer Zustellzyklus an der Maschinensteuerung der Werkzeugmaschine hinterlegt ist, die die Maschinensteuerung automatisch für den Zustellvorgang programmgesteuert durchführen kann. Hierbei ist es zweckmäßig, dass das Werkstück und das Schleifwerkzeug relativ zueinander ohne optische Kontrolle durch den Bediener zugestellt werden können, wobei in einem ersten automatischen Zyklusschritt im Eilgang d.h. bei hohen Verfahrgeschwindigkeiten einer oder mehrerer Linear- bzw. Rundachsen der Werkzeugmaschine automatisch bis zu einer Sicherheitsposition verfahren werden (z.B. voreingestellter Sicherheitsabstand), um dann in einem zweiten automatischen Zyklusschritt des Zustellvorgangs mittels einer automatische Annäherung mit kleinen Abstandsschritten zugestellt zu werden (Luftschleifen), bis der erste Kontakt auf Basis des Körperschallsignals an der Maschinensteuerung detektiert wird, woraufhin der eigentliche programmgesteuerte Bearbeitungsvorgang gestartet wird, z.B. entweder automatisch oder durch manuellen Startbefehl durch den Bediener.

Der eigentliche Schleifbearbeitungsvorgang kann automatisch beendet werden, wenn auf Basis eines erfassten durchgehenden Körperschallsignals an der Maschinensteuerung erkannt wird, dass der Bearbeitungsvorgang beendet werden kann, da eine erwünschte Oberflächenbeschaffenheit des geschliffenen Werkstücks erzielt ist ("Bauteil ausgeschliffen"), woraufhin die Maschinensteuerung den automatischen Bearbeitungsvorgang beendet, und der Bediener über die Benutzeroberfläche informiert wird, dass der automatische Bearbeitungsvorgang beendet ist.

Weiterhin kann das von dem Körperschallsensor ausgegebene Körperschallsignal zusätzlich zur Kollisionsüberwachung verwendet werden (kein zusätzlicher Kollisionssensor erforderlich), zur Untermaßerkennung (zu kleines Werkstück mit Untermaß) zur Aussonderung des Werkstücks mit erkanntem Untermaß, und/oder auch zur Prozessvisualisierung (z.B. für die nachfolgende Prozessanalyse bzw. Fehleranalyse). In bevorzugten Ausführungen kann das Körperschallsensorsignal des Körperschallsensors und/oder ein oder mehrere Auswertungsparameter auf Basis der Auswertung des Körperschallsignals z.B. an der Bedienoberfläche bzw. Benutzeroberfläche der numerischen Steuerung der Werkzeugmaschine bzw. an einem Monitor eines Bedienpults der Werkzeugmaschine angezeigt bzw. dargestellt werden.

In der bevorzugten Ausführung gemäß Fig. 1 wird an der Spindelvorrichtung 100 ein Körperschallsensor bereitgestellt, der als ringförmiger Körperschallsensor ausgebildet ist.

Dies hat den Vorteil, dass bei Einwechseln bzw. Aufnahme eines Schleifwerkzeugs mit Werkzeugschnittstelle an der Spindelvorrichtung 100 bei der Schleifbearbeitung durch die ermöglichte Körperschallmessung bzw. -erfassung eine Schleifbearbeitung durchgeführt werden kann, bei der das erfasste Körperschallsignal vorteilhaft z.B. für den Schleifprozess bzw. dessen Überwachung, zur Anschnitterfassung bzw. Detektierung des ersten Kontakts), für den Abricht- bzw. Abziehvorgang (ggf. gemäß dem vorstehend beschriebenen automatischen Programmzyklus) und/oder für automatischen Zustellung bzw. Anstellung des Schleifwerkzeugs relativ zum Werkstück (ggf. gemäß dem vorstehend beschriebenen automatischen Programmzyklus) verwendet werden kann. Somit ist selbst an universell einsetzbaren Werkzeugmaschinen mit werkzeugtragender Arbeitsspindel, die üblich für Fräs- und Bohrbearbeitungen vorgesehen sind, vorteilhaft eine zusätzliche Schleifbearbeitung ermöglicht, bei der die erforderlichen Prozesse für die Schleifbearbeitung leicht, sicher, zuverlässig, automatisch bzw. teilautomatisch und bei hoher Genauigkeit und Effizienz durchgeführt werden können.

Hierbei sind bei der zusätzlichen Bereitstellung des Körperschallsensors an der Arbeitsspindel der universell einsetzbaren Werkzeugmaschine, die üblich für Fräs- und Bohrbearbeitungen vorgesehen ist, jedoch keinerlei Einschränkungen in den Funktionalitäten für die Fräs- und Bohrbearbeitungen gegeben, so dass es sich um eine ausschließlich vorteilhafte Weiterbildung der universell einsetzbaren Werkzeugmaschine und deren Einsatzmöglichkeiten handelt. Im Gegenteil ergeben sich sogar Synergieeffekte, da der Körperschallsensor auch bei den Fräs- und Bohrbearbeitungen genutzt werden kann, z.B. um Lagerschäden an der Spindel zu erfassen, oder zur Kollisionserkennung. Somit kann z.B. in Ausführungsbeispielen sogar beispielhaft auf weitere sonst üblicherweise erforderliche Kollisionssensoren bzw. Vibrationssensoren verzichtet werden.

Im Ausführungsbeispiel gemäß Fig. 1 wird ein ringförmiger Körperschallsensor eingebaut, der einen bevorzugt ringförmigen (oder bevorzugt zumindest teilringförmigen) Rotor-Sensorabschnitt und einen bevorzugt ringförmigen (oder bevorzugt zumindest teilringförmigen) Stator-Sensorabschnitt aufweist, wobei der Rotor-Sensorabschnitt in dem bzw. an dem äußeren zweiten Ringelement 16 angeordnet, angebracht und/oder integriert ist, und/oder wobei der Rotor-Sensorabschnitt bevorzugt in dem bzw. an dem inneren ersten Ringelement angeordnet, angebracht und/oder integriert ist.

Hierbei sind Stator-Sensorabschnitt und Rotor-Sensorabschnitt bevorzugt insbesondere derart angeordnet, dass zwischen dem feststehenden Stator-Sensorabschnitt und dem rotierbaren Rotor-Sensorabschnitt ein Luftspalt ausgebildet ist, wobei Sensorsignale zwischen Stator-Sensorabschnitt und Rotor-Sensorabschnitt berührungslos übertragen werden.

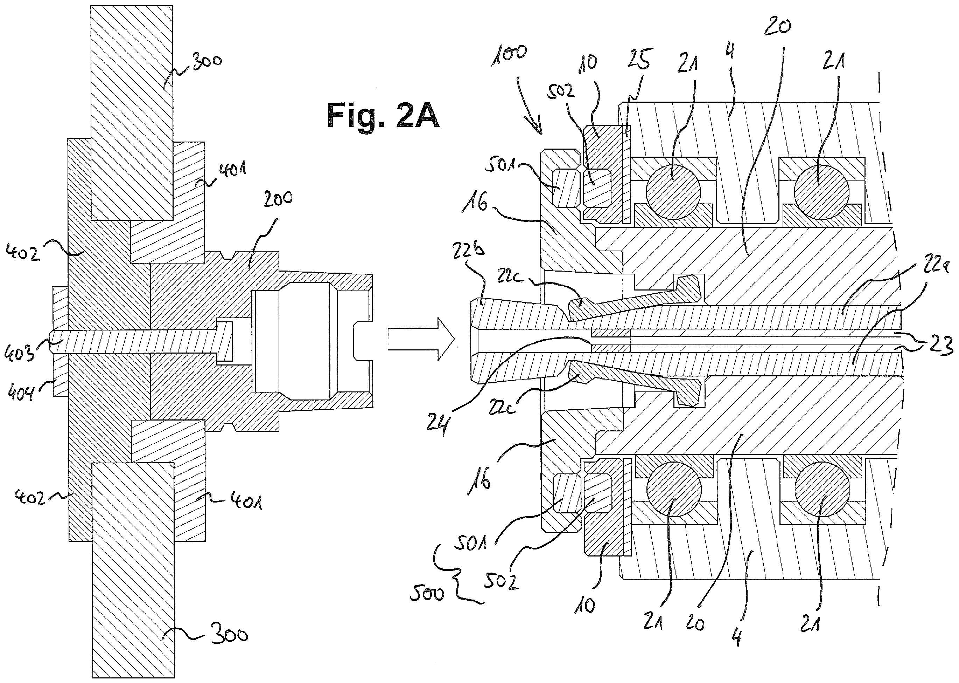

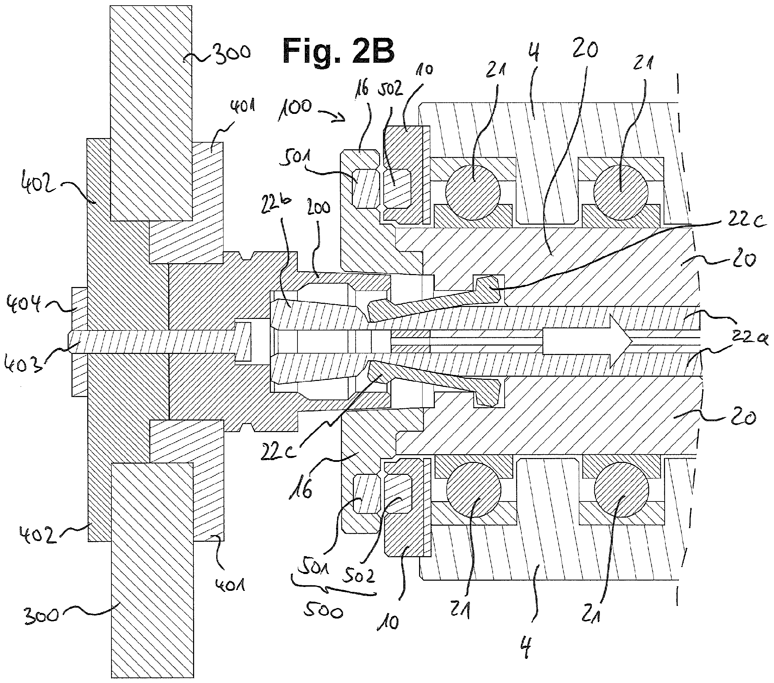

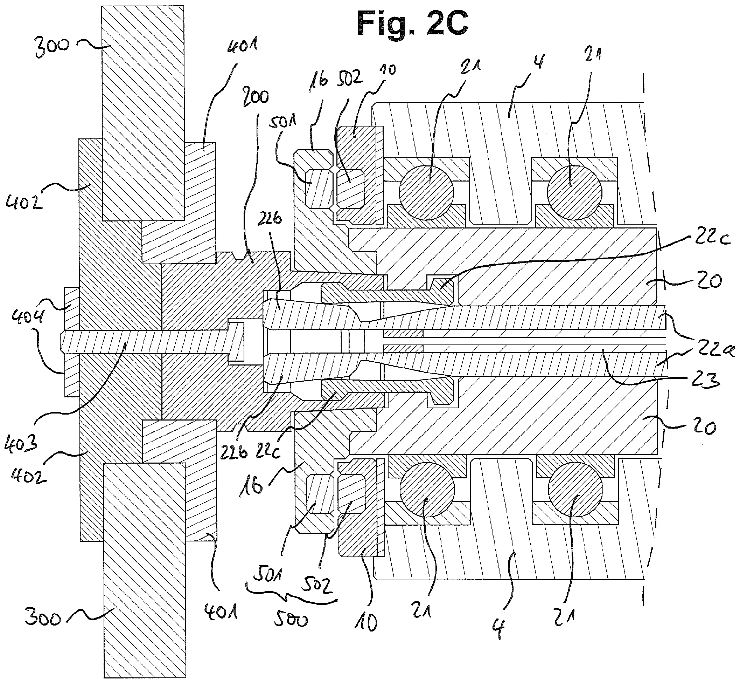

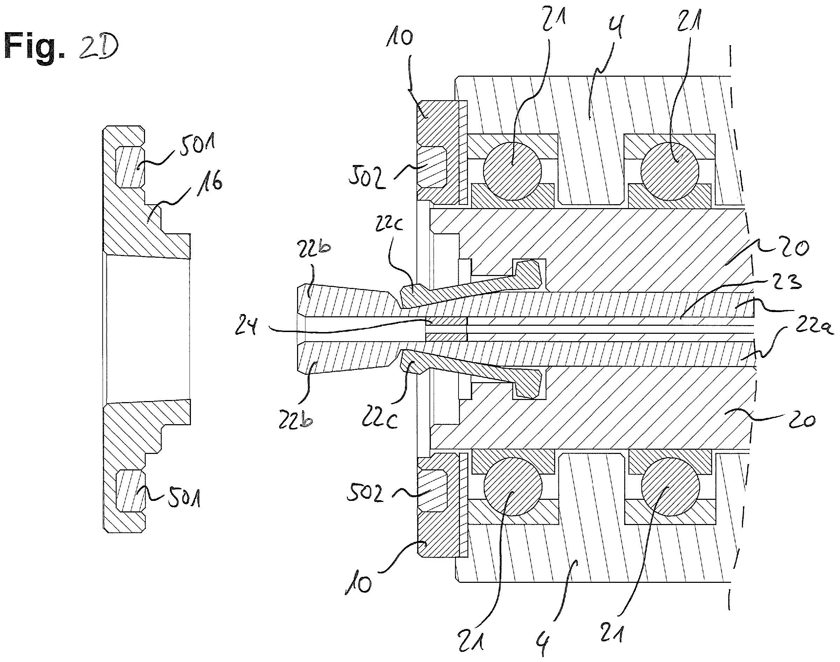

**Figs. 2A****,** **2B****,** **2C** und **2D** zeigen beispielhafte schematische Schnittdarstellungen bzw. Teilschnittdarstellungen einer Bearbeitungseinheit für eine programmgesteuerte Werkzeugmaschine gemäß einem weiteren Ausführungsbeispiel der vorliegenden Erfindung.

Insbesondere zeigen die Figs. 2A bis 2D beispielhafte schematische Teilschnittdarstellungen von Teilen einer Spindelvorrichtung 100 einer Arbeitsspindel, insbesondere einer werkzeugtragenden Arbeitsspindel, für eine programmgesteuerte Werkzeugmaschine (nicht dargestellt) gemäß einem Ausführungsbeispiel der vorliegenden Erfindung.

Die Spindelvorrichtung 100 gemäß dem Ausführungsbeispiel gemäß Figs. 2A bis 2D weist beispielhaft ein Spindelgehäuseelement 4 des Spindelgehäuses der Arbeitsspindel auf. Im inneren des Spindelgehäuseelements 4 wird beispielhaft eine Spindelkopfwelle 20 der Arbeitsspindel mittels den Lagerelementen 21 (beispielhaft als Kugellager dargestellt) um die Spindelachse rotierbar gelagert. Die Spindelkopfwelle 20 ist über einen nicht dargestellten Spindelabtrieb rotatorisch antreibbar.

Weiterhin ist die Spindelkopfwelle 20 beispielhaft als Hohlwelle ausgebildet, in deren Innenabschnitt eine Spannstange 22a einer Spannvorrichtung zum Spannen von Werkzeugschnittstellen angeordnet ist, hier beispielhaft zum Einspannen einer als Hohlschaftkegel 200 ausgebildeten Werkzeugschnittstelle. An einem Endabschnitt der Spannstange 22a an der aus der Spindel nach Außen weisenden Seite weist die Spannstange 22a beispielhaft einen Spannkopf 22b auf, der beispielhaft einstückig mit der Spannstange 22a ausgebildet ist, jedoch in weiteren Ausführungsbeispielen auch als separates Teil an der Spannstange 22a befestigt sein kann. Weiterhin weist die Spannvorrichtung eine Mehrzahl von Spannzangenelementen 22c auf, die dazu eingerichtet sind, einen Werkzeugkegel (hier beispielhaft Hohlschaftkegel 200) zu spannen, wenn die Spannstange 22a in Spindelachsrichtung ins innere der Spindel gezogen wird, zum Spannen des Werkzeugkegels.

Dies ist insbesondere in Zusammenschau der Figs. 2A bis 2B gezeigt bzw. illustriert, wobei der Hohlschaftkegel 200 im ungespannten Zustand, d.h. bei ausgefahrener Spannstange 22a (Fig. 2A) in Pfeilrichtung des Pfeils in Fig. 2A in eine an der Arbeitsspindel ausgebildete Werkzeugaufnahme einsetzbar bzw. auf den Spannkopf 22b aufsteckbar ist (Fig. 2B) und dann bei Einziehen der Spannstange 22a mit Spannkopf 22b ins Spindelinnere in Richtung der Spindelachse, d.h. in Pfeilrichtung des Pfeils der Fig. 2B, den Hohlschaftkegel 200 mittels der durch den Spannkopf 22b ausgespreitzten Spannzangenelemente 22c gespannt wird (Fig. 2C).

Beispielhaft ist im inneren der axial hohl ausgebildeten Spannzange 22a ein Zuführungsrohrelement 23 (z.B. Röhre, Röhrchen bzw. Schlauch) mit einem daran anschließenden Dichtungselement vorgesehen, durch das in bevorzugten Ausführungen eine innere Kühlschmierstoffzufuhr zu dem Hohlschaftkegel 200 bzw. durch diesen ggf. zum am Hohlschaftkegel 200 eingespannten bzw. befestigtem Werkzeug.

Hierbei ist in den Figs. 2A bis 2B beispielhaft ein Schleifwerkzeug 300 (insbesondere z.B. eine Schleifscheibe) an dem Hohlschaftkegel 200 befestigt bzw. mittels der Einspannelemente 401 und 402 über die Scheibe 404 und ein Befestigungselement 403 befestigt. Hierbei ist die Befestigung des Schleifwerkzeugs 300 an die Werkzeugschnittstelle, d.h. an den beispielhaften Hohlschaftkegel 200, nur vereinfacht dargestellt und kompliziertere und insbesondere mit weiteren Befestigungsmechanismen ausgestattete Befestigungen sind denkbar und zweckmäßig. Zum Beispiel kann die axiale Beabstandung der Schleifscheibe 300 zu dem Körper des Hohlschaftkegels 200 in weiteren Ausführungsbeispielen auch durch zusätzliche Zwischenelemente vergrößert werden.

Gemäß dem Ausführungsbeispiel umfasst die Spindelvorrichtung 100 weiterhin einen an der Stirnseite der Spindelvorrichtung 100 angeordneten Körperschallsensor 500 zur Erfassung eines Körperschallsignals auf Basis eines Körperschalls, der sich bei Bearbeitung eines Werkstücks mit dem Schleifwerkzeug 300 in dem Werkstück und dem Schleifwerkzeug 300 ausbreitet und sich über die Werkzeugschnittstelle (z.B. Hohlschaftkegel 200) auf Elemente und Bauteile der Spindelvorrichtung 100 überträgt.

Der Körperschallsensor 500 ist zweckmäßig als ringförmiger Körperschallsensor 500 ausgebildet, und umfasst einen beispielhaft ringförmigen Rotor-Sensorabschnitt 501 und einen beispielhaft ringförmigen Stator-Sensorabschnitt 502 aufweist.

Der ringförmige Stator-Sensorabschnitt 502 ist ein einem inneren Ringelement 10 (erstes Ringelement) angeordnet und der Rotor-Sensorabschnitt 501 ist ein einem äußeren Ringelement 16 (zweites Ringelement) angeordnet. Hierbei sind der ringförmige Stator-Sensorabschnitt 502, das innere Ringelement 10, der Rotor-Sensorabschnitt 501 und das äußere Ringelement 16 axial ausgerichtet und axial an der Spindelachse zentriert, wobei insbesondere das äußere Ringelement 16 mit dem Rotor-Sensorabschnitt 501 bei Rotation der Spindel mitrotieren um die Spindelachse.

Das innere Ringelement 10 ist stirnseitig an dem Spindelgehäuseabschnitt 4 bzw. Spindelgehäuseelement 4 befestigt, insbesondere bevorzugt lösbar befestigt (z.B. für einfachen Austausch bei Wartung, Beschädigung oder Verschleiß oder zur Reparatur der Sensorik).

Das äußere Ringelement 16 ist stirnseitig an der Spindelkopfwelle 20 befestigt und bildet gemäß Figs. 2A bis 2D mit dem Endabschnitt der Spindelkopfwelle 20 zusammen die Werkzeugaufnahme bzw. Werkzeugschnittstellenaufnahme zur Aufnahme der Werkzeugschnittstelle, d.h. beispielhaft zur Aufnahme eines Hohlschaftkegels 200 oder auch anderer Werkzeugkegel, wie z.B. Morsekegel oder Steilkegel.

Hierbei sind Stator-Sensorabschnitt 502 und Rotor-Sensorabschnitt 501, als auch die beiden Ringelemente 16 und 10 beispielhaft derart angeordnet, dass zwischen dem feststehenden Stator-Sensorabschnitt 502 und dem rotierbaren Rotor-Sensorabschnitt 501 bzw. zwischen den Ringelementen 10 und 16 ein Luftspalt ausgebildet ist, wobei Sensorsignale zwischen Stator-Sensorabschnitt 502 und Rotor-Sensorabschnitt 501 berührungslos übertragen werden.

Das äußere Ringelement 16 ist bevorzugt insbesondere lösbar befestigt (z.B. für einfachen Austausch bei Wartung, Beschädigung oder Verschleiß oder zur Reparatur der Sensorik).

Hierzu zeigt Fig. 2D eine beispielhafte Situation, in der der Rotor-Sensorabschnitt 501 des Körperschallsensors 500 zusammen mit dem äußeren Ringelement 16 aus der Spindelvorrichtung 100 ausgebaut ist bzw. aus der Befestigung an die Spindelvorrichtung 100 gelöst ist.

Dies ermöglicht einerseits den Austausch bzw. die Wartung des Körperschallsensors, allerdings ergibt sich ein weiterer großer Vorteil dadurch, dass das äußere Ringelement 10 und ggf. auch das innere Ringelement 16 als zusätzliche Dämpfungselemente wirken, wenn z.B. unbeabsichtigte Kollisionen an der Arbeitsspindel der Werkzeugmaschine passieren, wobei bei leichten bis mittelschweren Kollisionen vorteilhaft zuerst die einfach und kostengünstig austauschbaren Ringelemente mit der Sensorik beschädigt werden, anstatt dass bereits bei geringen Kollisionen an der Arbeitsspindel wie bei herkömmlichen Spindelvorrichtungen teilweise schon nur schwer bzw. kostspielig reparierbaren Schäden entstehen können.

Weiterhin können in weiteren Ausführungsbeispielen analog zu Fig. 1 ein oder mehrere zusätzliche ringförmige Abdeckelemente an der Stirnseite des äußeren Ringelements 16 vorgesehen sein, wodurch die Dämpfungsfunktion weiter verstärkt wird, oder auch ein zwischen Gehäuseteil 4 und Ringelement 10 angeordnetes weiteres Scheibenelement 25 zur weiteren Dämpfung.

Schließlich sei noch angemerkt, dass die Positionierung des Körperschallsensors 500 an der Stirnseite der Spindel bzw. des Spindelgehäuses 1 bzw. 4 den Vorteil bietet, dass die Körperschallwellen bzw. -schwingungen quasi störungsfrei über die aufgenommene und gespannte Werkzeugschnittstelle 200 auf den Körperschallsensor 500 übertragen werden können und somit eine vorteilhaft störungsunanfälligere Erfassung des Körperschallsignals ermöglicht werden kann.

Besonders zweckmäßig ist hierbei insbesondere eine Positionierung des Körperschallsensors 500 auf einer zum Spindeläußeren weisenden Seite einer äußersten Lagerung bzw. eines äußersten Lagerelements der Spindel, da eine Platzierung des Körperschallsensors 500 im Spindelinneren zumindest dann zu einer unerwünschten Störung der zu erfassenden Körperschallwellen bzw. Schwingungen führen kann, wenn die Ausbreitungsrichtung der Körperschallwellen von der Werkzeugschnittstelle zu der Position des Körperschallsensors durch oder zumindest an einer Lagerung vorbei führen.

Eine besonders bevorzugte Ausführung ist insbesondere dann gegeben, wenn die Werkzeugaufnahme derart ausgestaltet ist, dass die Werkzeugschnittstelle im gespanten Zustand in der Werkzeugaufnahme ein Ringelement berührt, in dem der Rotor-Sensorabschnitt 501 des Körperschallsensors 500 angeordnet ist, indem ein innerer Abschnitt des Ringelements zumindest einen Werkzeugaufnahmeabschnitt der Spindelvorrichtung ausbildet oder zumindest mit ausbildet.

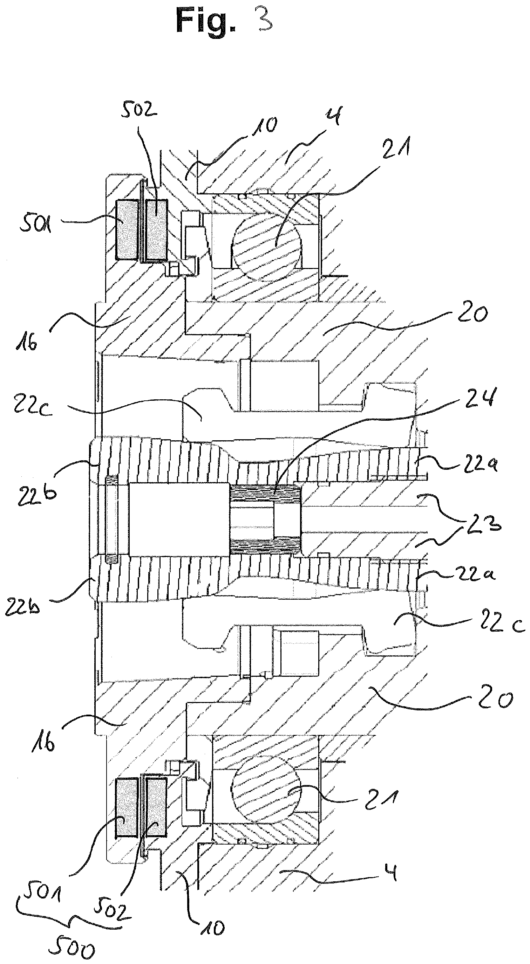

**Fig. 3** zeigt eine beispielhafte schematische Schnittdarstellung bzw. Teilschnittdarstellung einer weiteren Bearbeitungseinheit für eine programmgesteuerte Werkzeugmaschine gemäß einem weiteren Ausführungsbeispiel der vorliegenden Erfindung.

Insbesondere zeigt die Fig. 3 eine beispielhafte schematische Teilschnittdarstellung von Teilen einer weiteren Spindelvorrichtung 100 einer Arbeitsspindel, insbesondere einer werkzeugtragenden Arbeitsspindel, für eine programmgesteuerte Werkzeugmaschine (nicht dargestellt) gemäß einem Ausführungsbeispiel der vorliegenden Erfindung.

Hierbei sind die Bauteile und Elemente der Spindelvorrichtung 100 gemäß Fig. 3 mit gleichen Bezugszeichen gekennzeichnet, wie in den Ausführungsbeispielen gemäß der vorstehend beschriebenen Ausführungsbeispiele, und Unterschiede bestehen im Wesentlichen nur in konstruktiven Ausformungen der jeweiligen Elemente, so dass hier an dieser Stelle auf die Figurenbeschreibung insbesondere der Figs. 2A bis 2C verwiesen wird, die im Wesentlichen analog auch für Fig. 3 gilt, insbesondere unter Berücksichtigung der gleichen Bezugszeichen.

Die Erfindung ist nicht auf die vorstehend dargestellten Ausführungsbeispiele beschränkt. Beispielsweise kann die Auswerteeinheit der Sensorik in den Innenring, d.h. in das zweite Ringelement bzw. in den Rotor, funktional und/oder auch konstruktiv integriert sein. Die Auswerteeinheit der Sensorik kann jedoch auch außerhalb in einem äußeren Bauteil der Spindel bzw. des Spindelgehäuses angeordnet und über ein Kabel mit der Sensorik verbunden sein, und ggf. sogar in der Maschinensteuerung vorgenommen werden.

## Patentansprüche

1. Spindelvorrichtung für eine programmgesteuerte Werkzeugmaschine, mit:
- einem Spindelgehäuse (1, 4),
- einer in dem Spindelgehäuse (1, 4) um eine Spindelachse drehbar gelagerten Arbeitsspindel mit einer Spannvorrichtung (22a, 22b, 22c) zum Einspannen einer in einem Werkzeugaufnahmeabschnitt der Spindelvorrichtung (100) eingesetzten Werkzeugschnittstelle (200), die dafür eingerichtet ist, ein Fräs- oder Bohrwerkzeug zu halten,
- einer am Spindelgehäuse (1, 4) angeordneten Sensorikeinrichtung zum Erfassen auftretender Körperschallwellen bzw. -schwingungen, und
- einem ersten Ringelement (10) und einem zweiten Ringelement (16), wobei das erste Ringelement (10) fest mit dem Spindelgehäuse (1, 4) verbunden ist und das zweite Ringelement (16) fest mit der drehbar gelagerten Arbeitsspindel verbunden ist,
**dadurch gekennzeichnet, dass**
die Sensorikeinrichtung zumindest einen ringförmig ausgebildeten Körperschallsensor (500) aufweist, der dazu eingerichtet ist, bei Schleifbearbeitungen mit geometrisch unbestimmter Schneide auftretende Körperschallwellen bzw. - schwingungen zu erfassen,
zumindest ein Abschnitt des Körperschallsensors (500) an oder in dem zweiten Ringelement (16) angeordnet oder gehalten ist,
und ein innerer Abschnitt des zweiten Ringelements (16) zumindest einen Teil des Werkzeugaufnahmeabschnitts der Spindelvorrichtung (100) ausbildet.

2. Spindelvorrichtung gemäß Anspruch 1, **dadurch gekennzeichnet, dass**
der Körperschallsensor (500) an einer Stirnseite des Spindelgehäuses (1, 4) angeordnet ist.

3. Spindelvorrichtung gemäß Anspruch 1 oder 2, **dadurch gekennzeichnet, dass**
der ringförmige Körperschallsensor (500) einen ringförmigen Rotor-Sensorabschnitt (501) und einen ringförmigen Stator-Sensorabschnitt (502) umfasst.

4. Spindelvorrichtung gemäß Anspruch 3, **dadurch gekennzeichnet, dass**
der ringförmige Rotor-Sensorabschnitt (501) in oder an dem zweiten Ringelement (20) angeordnet oder gehalten ist, und/oder
der ringförmige Stator-Sensorabschnitt (502) in oder an dem ersten Ringelement (10) angeordnet oder gehalten ist.

5. Spindelvorrichtung gemäß einem der vorstehend genannten Ansprüche, **dadurch gekennzeichnet, dass**
das zweite Ringelement (16) drehfest mit einer im Spindelgehäuse (1, 4) drehbar gelagerten Spindelkopfwelle (20) der Spindelvorrichtung (100) verbunden ist oder an dieser befestigt ist.

6. Spindelvorrichtung gemäß Anspruch 5, wobei das zweite Ringelement (16) lösbar an der Spindelkopfwelle (20) befestigt ist.

7. Spindelvorrichtung gemäß einem der vorstehend genannten Ansprüche, **dadurch gekennzeichnet, dass**
der innere Abschnitt des zweiten Ringelements (16) mit zumindest einem Abschnitt der Werkzeugschnittstelle (200) in Kontakt steht, wenn die Werkzeugschnittstelle (200) in dem Werkzeugaufnahmeabschnitt der Spindelvorrichtung (100) eingesetzt und mittels der Spannvorrichtung (22a, 22b, 22c) gespannt ist.

8. Spindelvorrichtung gemäß einem der vorstehend genannten Ansprüche, **dadurch gekennzeichnet, dass**
das erste Ringelement (10) drehfest an dem Spindelgehäuse (1, 4) befestigt ist.

9. Spindelvorrichtung nach Anspruch 8, wobei das erste Ringelement (10) lösbar am Spindelgehäuse (1, 4) befestigt ist.

10. Spindelvorrichtung gemäß einem der vorstehend genannten Ansprüche, weiter **gekennzeichnet durch**
eine Mehrzahl von Spindellagern (21), wobei der Körperschallsensor (500) auf einer der Außenseite der Spindelvorrichtung (100) zugewandten Seite des äußersten Spindellagers (21) der Mehrzahl von Spindellagern (21) angeordnet ist.

11. Spindelvorrichtung gemäß einem der vorstehend genannten Ansprüche, weiter **gekennzeichnet durch**
eine Mehrzahl von Spindellagern (21), wobei der Körperschallsensor (500) derart positioniert angeordnet ist, dass in einer direkten Körperschallwellenausbreitungsrichtung in der Spindelvorrichtung (100) von dem Werkzeugaufnahmeabschnitt hin zu dem Körperschallsensor (500) keines der Spindellager (21) angeordnet ist.

12. Verfahren zur schleifenden Bearbeitung eines Werkstücks an einer universell einsetzbaren Werkzeugmaschine mit einer Spindelvorrichtung gemäß einem der vorstehenden Ansprüche, umfassend:
- Schleifbearbeiten eines an einem Werkstückspannmittel der Werkzeugmaschine eingespannten Werkstücks mit einem Schleifwerkzeug, das gehalten ist an einer an der Spannvorrichtung (22a, 22b, 22c) der Arbeitsspindel der Spindelvorrichtung eingespannten und in dem Werkzeugaufnahmeabschnitt der Spindelvorrichtung (100) eingesetzten Werkzeugschnittstelle (200), und
- Erfassen der bei der Schleifbearbeitungen auftretenden Körperschallwellen bzw. -schwingungen mittels des Körperschallsensors (500) der Sensorikeinrichtung der Spindelvorrichtung (100).

13. Verfahren zum Abrichten eines Schleifwerkzeugs an einer universell einsetzbaren Werkzeugmaschine mit einer Spindelvorrichtung gemäß einem der Ansprüche 1 bis 11, umfassend:
- Durchführen eines Abziehvorgangs für ein Schleifwerkzeug, das gehalten ist an einer an der Spannvorrichtung (22a, 22b, 22c) der Arbeitsspindel der Spindelvorrichtung eingespannten und in dem Werkzeugaufnahmeabschnitt der Spindelvorrichtung (100) eingesetzten Werkzeugschnittstelle (200), an einem Abziehstück unter Überwachung des Abziehvorgangs auf Basis eines Körperschallsignals des Körperschallsensors (500) der Sensorikeinrichtung der Spindelvorrichtung (100).

## Claims

1. A spindle device for a program-controlled machine tool, comprising:
- a spindle housing (1, 4),
- a work spindle rotatably mounted about a spindle axis in said spindle housing (1, 4) and comprising a clamping device (22a, 22b, 22c) for clamping a tool interface (200) which is inserted in a tool receiving portion of said spindle device (100) and configured to hold a milling or drilling tool,
- a sensor device arranged on said spindle housing (1, 4) for detecting structure-born sound waves or vibrations that occur, and
- a first ring element (10) and a second ring element (16), said first ring element (10) being fixedly connected to said spindle housing (1, 4) and said second ring element (16) being fixedly connected to the rotatably mounted work spindle,
**characterized in that**
said sensor device includes at least one annular structure-borne sound sensor (500) configured to detect structure-borne sound waves or vibrations occurring during grinding operations with a geometrically undefined cutting edge,
at least a portion of said structure-borne sound sensor (500) arranged or held on or in said second ring element (16), and
an inner portion of said second ring element (16) forms at least part of the tool receiving portion of said spindle device (100).

2. The spindle device according to claim 1, **characterized in that**
said structure-borne sound sensor (500) is arranged on an end face of said spindle housing (1, 4).

3. The spindle device according to claim 1 or 2, **characterized in that**
the annular structure-borne sound sensor (500) comprises an annular rotor sensor portion (501) and an annular stator sensor portion (502).

4. The spindle device according to claim 3, **characterized in that**
the annular rotor sensor portion (501) is arranged or held in or on said second ring element (20), and/or
the annular stator sensor portion (502) is arranged or held in or on said first ring element (10).

5. The spindle device according to one of the preceding claims, **characterized in that**
said second ring element (16) is connected or fastened, in a rotationally fixed manner, to a spindle head shaft (20) of said spindle device (100) which is rotatably mounted in said spindle housing (1, 4).

6. The spindle device according to claim 5, wherein said second ring element (16) is detachably fastened to said spindle head shaft (20).

7. The spindle device according to one of the preceding claims, **characterized in that**
the inner portion of said second ring element (16) is in contact with at least a portion of said tool interface (200) when said tool interface (200) is inserted in the tool receiving portion of said spindle device (100) and clamped by means of said clamping device (22a, 22b, 22c).

8. The spindle device according to one of the preceding claims, **characterized in that**
said first ring element (10) is fastened to said spindle housing (1, 4) in a rotationally fixed manner.

9. The spindle device according to claim 8, wherein said first ring element (10) is detachably fastened to said spindle housing (1, 4).

10. The spindle device according to one of the preceding claims, further **characterized by**
a plurality of spindle bearings (21), said structure-borne sound sensor (500) being arranged on a side of the outermost spindle bearing (21) of the plurality of spindle bearings (21) which faces the outer side of said spindle device (100).

11. The spindle device according to one of the preceding claims, further **characterized by**
a plurality of spindle bearings (21), said structure-borne sound sensor (500) being positioned such that none of the spindle bearings (21) is arranged in a direct propagation direction of structure-borne sound waves in said spindle device (100) from the tool receiving portion toward said structure-borne sound sensor (500).

12. A method of grindingly machining a workpiece on a universally applicable machine tool with a spindle device according to one of the preceding claims, said method comprising:
- grindingly machining a workpiece clamped on a workpiece clamping device of the machine tool with a grinding tool held on a tool interface (200) which is clamped on said clamping device (22a, 22b, 22c) of the work spindle of the spindle device and inserted in the tool receiving portion of said spindle device (100), and
- detecting the structure-borne sound waves or vibrations occurring during the grinding operations by means of said structure-borne sound sensor (500) of the sensor device of said spindle device (100).

13. A method for dressing a grinding tool on a universally applicable machine tool with a spindle device according to one of claims 1 to 11, said method comprising:
- performing a dressing process for a grinding tool held on said tool interface (200), which is clamped on said clamping device (22a, 22b, 22c) of the work spindle of the spindle device and inserted in the tool receiving portion of said spindle device (100), on a dressing piece while monitoring the dressing process on the basis of a structure-borne sound signal from said structure-borne sound sensor (500) of the sensor device of said spindle device (100).

## Revendications

1. Dispositif à broche pour une machine-outil commandée par programme, comprenant :
- un boîtier de broche (1, 4),
- une broche de travail montée dans le boîtier de broche (1, 4) de manière à pouvoir tourner autour d'un axe de broche avec un dispositif de serrage (22a, 22b, 22c) pour le serrage d'une interface d'outil (200) insérée dans une section de logement d'outil du dispositif à broche (100), qui est conçue pour maintenir un outil de fraisage ou de perçage,
- un système de détection disposé sur le boîtier de broche (1, 4) pour détecter des ondes ou vibrations de bruit de structure apparaissant, et
- un premier élément annulaire (10) et un deuxième élément annulaire (16), dans lequel le premier élément annulaire (10) est relié fixement au boîtier de broche (1, 4) et le deuxième élément annulaire (16) est relié fixement à la broche de travail montée en rotation,
**caractérisé en ce que**
le système de détection présente au moins un capteur de bruit de structure (500) réalisé de manière annulaire, qui est conçu pour détecter des ondes ou vibrations de bruit de structure apparaissant lors d'usinages de rectification avec une lame géométriquement indéfinie,
au moins une section du capteur de bruit de structure (500) est disposée ou maintenue sur ou dans le deuxième élément annulaire (16),
et une section intérieure du deuxième élément annulaire (16) réalise au moins une partie de la section de logement d'outil du dispositif à broche (100).

2. Dispositif à broche selon la revendication 1, **caractérisé en ce que**
le capteur de bruit de structure (500) est disposé sur une face frontale du boîtier de broche (1, 4).

3. Dispositif à broche selon la revendication 1 ou 2, **caractérisé en ce que**
le capteur de bruit de structure annulaire (500) comprend une section de capteur de rotor annulaire (501) et une section de capteur de stator annulaire (502).

4. Dispositif à broche selon la revendication 3, **caractérisé en ce que**
la section de capteur de rotor annulaire (501) est disposée ou maintenue dans ou sur le deuxième élément annulaire (20), et/ou
la section de capteur de stator annulaire (502) est disposée ou maintenue dans ou sur le premier élément annulaire (10).

5. Dispositif à broche selon l'une quelconque des revendications précédentes, **caractérisé en ce que**
le deuxième élément annulaire (16) est relié de manière solidaire en rotation à un arbre de tête de broche (20) du dispositif à broche (100) monté en rotation dans le boîtier de broche (1, 4) ou fixé sur celui-ci.

6. Dispositif à broche selon la revendication 5, dans lequel le deuxième élément annulaire (16) est fixé de manière détachable sur l'arbre de tête de broche (20).

7. Dispositif à broche selon l'une quelconque des revendications précédentes, **caractérisé en ce que**
la section intérieure du deuxième élément annulaire (16) est en contact avec au moins une section de l'interface d'outil (200), lorsque l'interface d'outil (200) est insérée dans la section de logement d'outil du dispositif à broche (100) et serrée au moyen du dispositif de serrage (22a, 22b, 22c).

8. Dispositif à broche selon l'une quelconque des revendications précédentes, **caractérisé en ce que**
le premier élément annulaire (10) est fixé de manière solidaire en rotation sur le boîtier de broche (1, 4).

9. Dispositif à broche selon la revendication 8, dans lequel le premier élément annulaire (10) est fixé de manière détachable sur le boîtier de broche (1,4).

10. Dispositif à broche selon l'une quelconque des revendications précédentes, **caractérisé en outre par**
une pluralité de supports de broche (21), dans lequel le capteur de bruit de structure (500) est disposé sur un côté du support de broche (21) le plus à l'extérieur de la pluralité de supports de broche (21) tourné vers le côté extérieur du dispositif à broche (100).

11. Dispositif à broche selon l'une quelconque des revendications précédentes, **caractérisé en outre par**
une pluralité de supports de broche (21), dans lequel le capteur de bruit de structure (500) est disposé de manière positionnée de telle sorte qu'aucun des supports de broche (21) n'est disposé dans une direction de propagation d'onde de bruit de structure directe dans le dispositif à broche (100) à partir de la section de logement d'outil vers le capteur de bruit de structure (500).

12. Procédé pour l'usinage par rectification d'une pièce sur une machine-outil pouvant être insérée de manière universelle avec un dispositif à broche selon l'une quelconque des revendications précédentes, comprenant :
- l'usinage par rectification d'une pièce serrée sur un moyen de serrage de pièce de la machine-outil avec un outil de rectification, qui est maintenu sur une interface d'outil (200) serrée sur le dispositif de serrage (22a, 22b, 22c) de la broche de travail du dispositif à broche et insérée dans la section de logement d'outil du dispositif à broche (100), et
- la détection des ondes ou vibrations de bruit de structure apparaissant lors des usinages par rectification au moyen du capteur de bruit de structure (500) du système de détection du dispositif à broche (100).

13. Procédé pour dresser un outil de rectification sur une machine-outil pouvant être utilisée de manière universelle avec un dispositif à broche selon l'une quelconque des revendications 1 à 11, comprenant :
- la mise en oeuvre d'un processus d'enlèvement pour un outil de rectification, qui est maintenu sur une interface d'outil (200) serrée sur le dispositif de serrage (22a, 22b, 22c) de la broche de travail du dispositif à broche et insérée dans la section de logement d'outil du dispositif à broche (100), sur une pièce d'enlèvement avec surveillance du processus d'enlèvement sur la base d'un signal de bruit de structure du capteur de bruit de structure (500) du système de détection du dispositif à broche (100).
